# EUROPEAN PATENT SPECIFICATION

(11) **EP 3 897 097 B1**
(45) Date of publication and mention of the grant of the patent: **10.12.2025**
(21) Application number: 18833887.5
(22) Date of filing: 21.12.2018
(51) Int. Cl.: A01F 15/07

(54) **BALER CONNECTABLE TO A TRACTOR FOR PROVIDING ROUND BALES AND METHOD FOR PROVIDING A ROUND BALE IN A BALER**
AN EINEN TRAKTOR ANSCHLIESSBARE BALLENPRESSE ZUR BEREITSTELLUNG VON RUNDBALLEN UND VERFAHREN ZUR BEREITSTELLUNG EINES RUNDBALLENS IN EINER BALLENPRESSE
PRESSE À BALLES POUVANT ÊTRE RELIÉE À UN TRACTEUR POUR CRÉER DES BALLES RONDES ET PROCÉDÉ DE PRODUCTION DE BALLES RONDES DANS UNE PRESSE À BALLES

(30) Priority: 01.01.2018 NO 20180003
(43) Date of publication of application: 27.10.2021
(73) Proprietor: Kverneland Group Ravenna S.r.l., 48026 Russi (RA) (IT)
(72) Inventor: NES, Nils Asbjørn, 6878 Veitastrond (NO)
(74) Representative: Conti, Marco
(86) International application number: PCT/EP2018/086729
(87) International publication number: WO 2019/129738

(56) References cited:
- EP-A1- 1 321 028
- EP-A1- 1 364 574
- EP-A1- 3 132 673
- DE-A1- 3 323 610
- US-A- 4 370 848

## Description

### Technical field

This invention relates to a baler connectable to a tractor for providing round bales and to a method for providing a round bale in a baler.

### Background art

Balers are commonly used in agricultural field to collect crops, hay or straw forming compact bales, that may have a round or square shape. Specifically, the present invention relates to a baler for providing round bales.

A round baler comprises a baling chamber, in which the crops is inserted by means of a pick-up device and then compressed to form the round bale. The compression chamber comprises two side walls, each one defining a base of the cylinder baling chamber, and a plurality of rollers, defining a lateral side of the cylinder baling chamber and surrounding the bale during compression. The baler comprises a tail gate, movable between a closed position, in which the bale formation occurs, and an open position, in which the formed bale is ejected from the baling chamber.

The round baler can be a fixed chamber baler or a variable chamber baler. In the fixed chamber balers, the plurality of rollers has a fixed position and the volume of the baling chamber does not change during bale formation. In the fixed chamber baler, the plurality of rollers itself compresses the crops. Example of this round balers are disclosed in the document EP3028561B1. In the variable chamber balers, the plurality of rollers is movable to vary the volume of the baling chamber. Moreover, in the variable chamber balers, the plurality of rollers drives a compression belt which is in contact with the crops to compress it. Example of this round balers are disclosed in the document FR2767635.

Anyway, those solutions do not allow to reach high level of compression for the bale, in fact, the power required by the plurality of rollers grows with the compression of the bale.

Another important aspect of the balers is the wrapping of the formed bale, to avoid future disintegration and/or to make the bale impermeable to liquid. In the field are known some solutions wherein the bale is first wrapped with a net, for keeping the optimal dimension, and then wrapped with plastic film, to make it impermeable to liquid. The wrapping operation may be performed in several ways. In some solutions the net wrapping operation may be performed on the baler itself, during the ejection of the bale trough the tail gate. Solutions like this are disclosed in US2015033666A1. In other solutions, disclosed in EP1461995B2 and EP3114920B1, the plastic film wrapping may be performed inside the baling chamber itself. In other solutions, the bale is wrapped with net or plastic film in a separate, external wrapping system. A further example of known balers with wrapping apparatus is disclosed by patent document EP1321028A1.

Conservation of grass in round bale has been done for several decades. Initially, the grass was formed into a compact cylinder and then placed in an air tight PVC bag (which forms substantially a tube) that acted as an oxygen barrier, thus preventing heat from grazing and bursting the grass as food for the animals.

There have always been two types of round baler presses, chamber presses and variable chamber presses.

Both of the press types form the grass to a cylinder with a length of about 120 cm. In the trunk presses, the diameter of grass cylinders is about 120 cm, while the diameter of grass balls formed in a variable press can vary from 80-180 cm.

In the 1980s, a packing machine was introduced on the market, which simply put the round balls on plastic film that served as a very effective oxygen barrier. This was in many ways a revolution when it came to preserving grass in round bale and the method gained a very rapid spread.

Later on, there were round balers with integrated packing machines. These are large and complicated machines that are virtually entirely unique in the production of round balls.

### Disclosure of the invention

Scope of the present invention is to overcome at least one of the aforementioned drawbacks. This scope is achieved by the baler and the method according to the appended claims.

### Brief description of drawings

This and other features of the invention will become more apparent from the following detailed description of a preferred, non-limiting example embodiment of it, with reference to the accompanying drawings, in which:

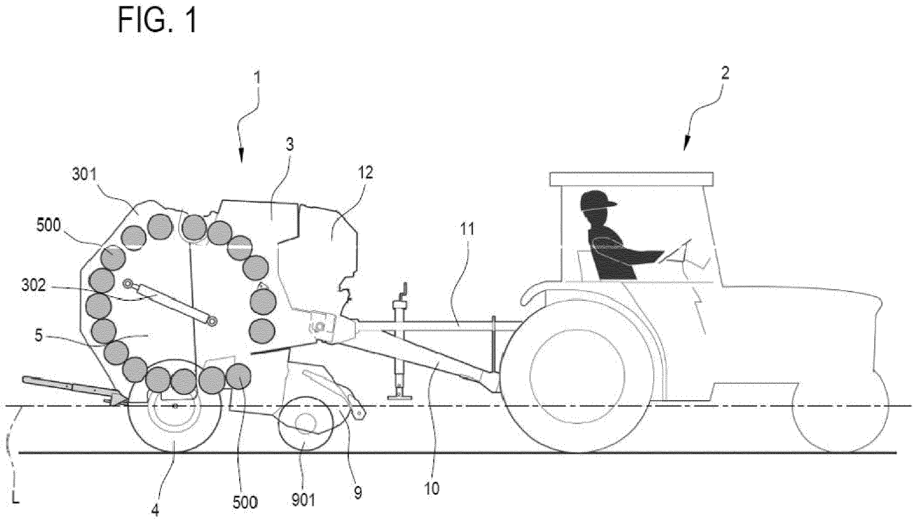

- Figure 1 illustrates a baler connectable to a tractor, according to the present disclosure;

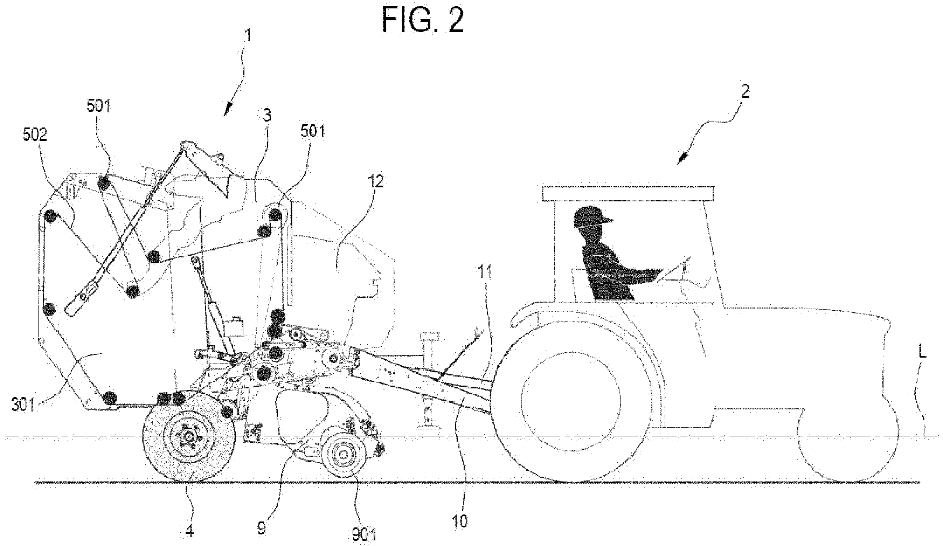

- Figure 2 illustrates an embodiment of the baler connectable to a tractor of figure 1;

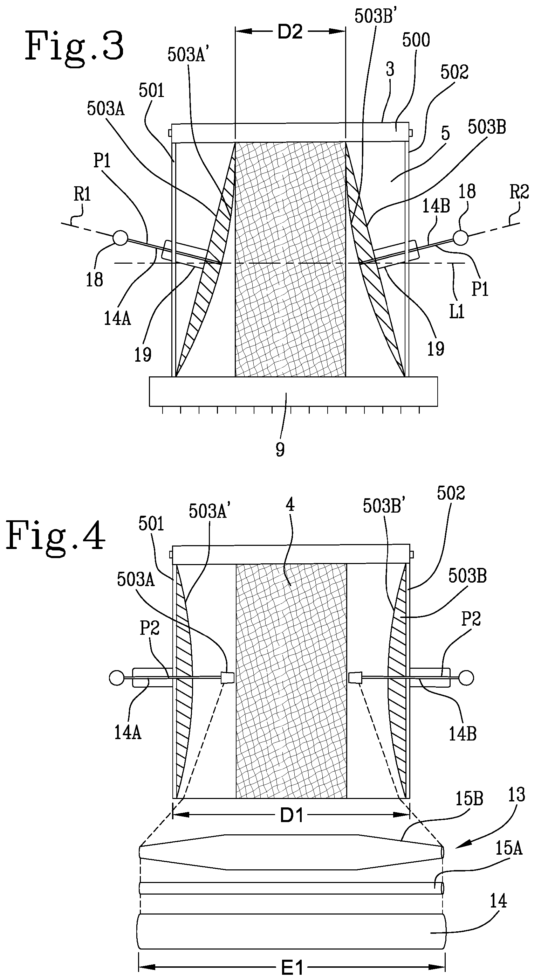

- Figure 3 illustrates a baling chamber of a baler connectable to a tractor;
- Figure 4 illustrates a bale wrapping system of a baler connectable to a tractor;

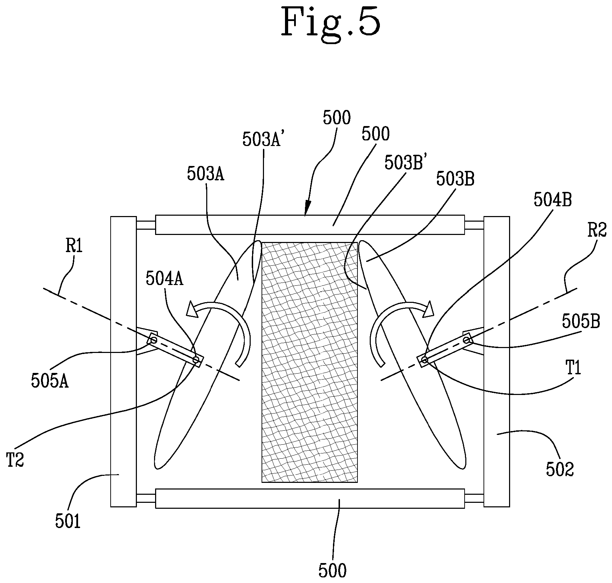

- Figure 5 illustrates an embodiment of the baling chamber of figure 3;

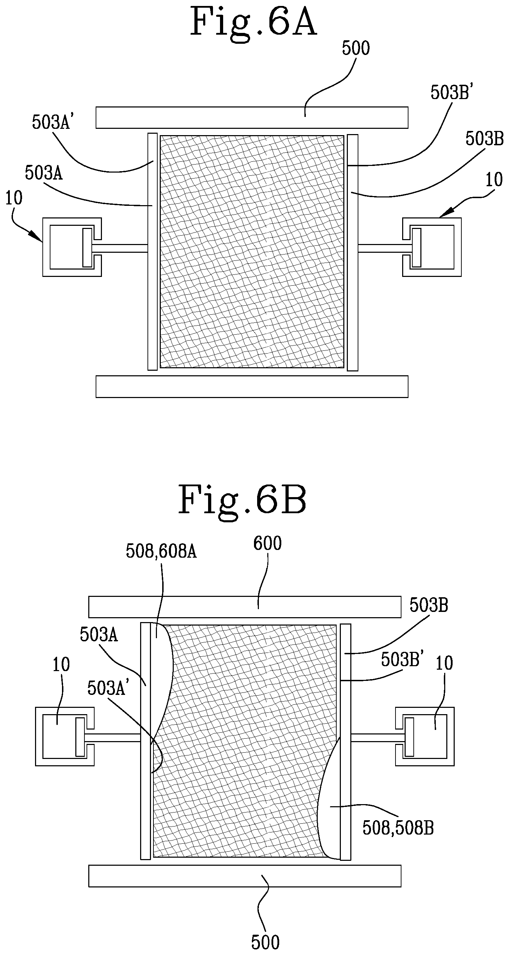

- Figures 6A and 6B illustrate two different embodiments of the baling chamber of figure 3, respectively;

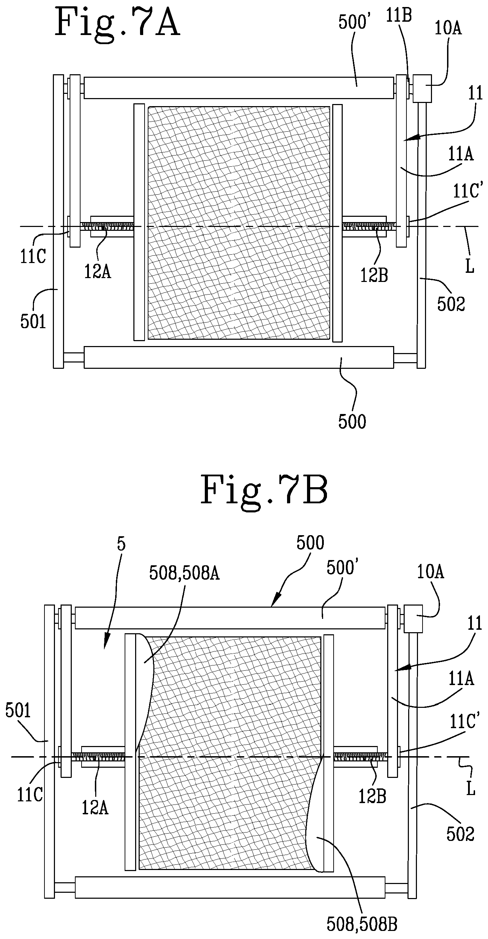

- Figures 7A and 7B illustrate two different embodiments of the baling chamber of figure 3, respectively;

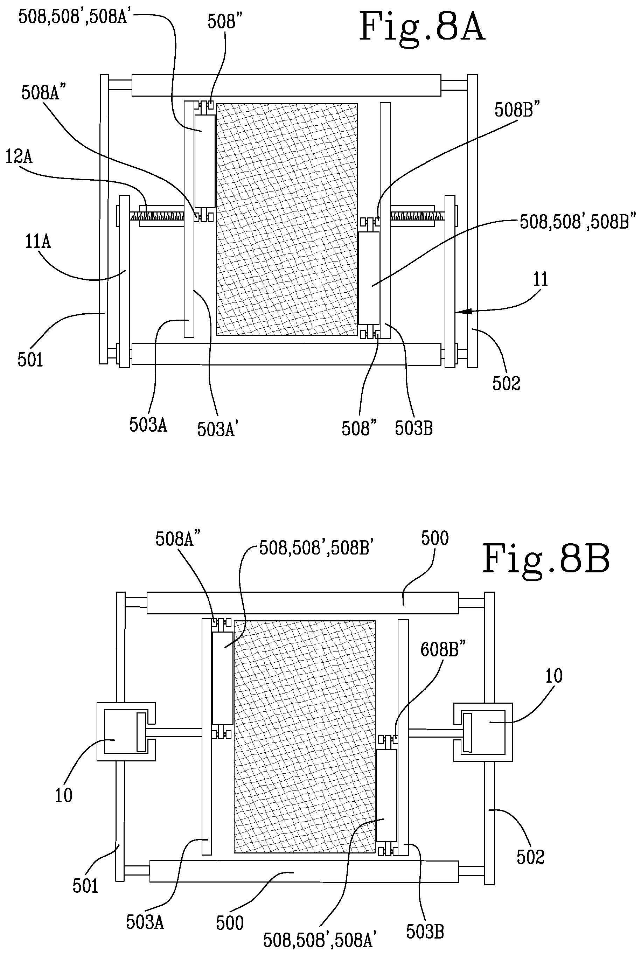

- Figures 8A and 8B illustrate two different embodiments of the baling chamber of figure 3, respectively;

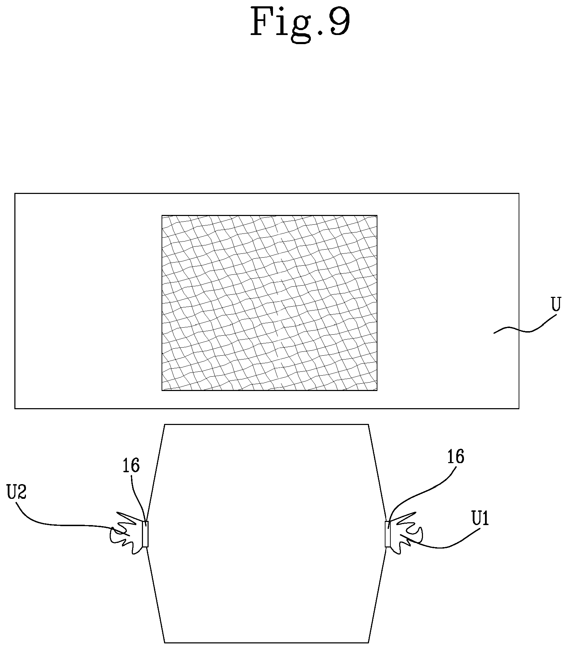

- Figure 9 illustrates a bale on the plastic film before wrapping and the same bale after wrapping operation, respectively.

### Detailed description of preferred embodiments of the invention

With reference to the accompanying drawings, the numeral 1 denotes a baler connectable to a tractor 2, according to the present disclosure.

With reference to the accompanying drawings, the numeral 1 denotes a baler connectable to a tractor, according to the present disclosure.

The baler 1 is connectable to a tractor 2. The baler 1, in an embodiment, includes a tongue 10. The tongue 10 is connectable to tractor 2. The tongue 10 is configured to allow the tractor 2 towing the baler 1. The baler 1, in an embodiment, includes a drive shaft 11. The drive shaft 11, in an embodiment, is a cardan shaft. The drive shaft 11 is configured to transmit mechanical rotation from a motor of the tractor 2 to the baler 1.

The baler 1 includes an axle, having a first end and a second end. The baler 1 includes a first wheel 4 and a second wheel 4. The axle is pivotally connected, at its end, to the pair of wheels 4.

The baler 1, in an embodiment, includes a frame 3. The frame 3 in an embodiment is supported on the axle 6. The baler 1, in an embodiment, includes a tailgate 301. The tailgate 301 is connected to the frame 3. The tailgate 301 is movable between a closed position and an open position. The open position is configured to allow the discharging of the bale.

The baler 1, in an embodiment, includes a baling chamber 5. The baling chamber 5 is configured for receiving crops and for housing a formed (forming) bale. The baler 1, in an embodiment, includes a plurality of rollers 500. The plurality of rollers 500, in an embodiment, delimits the baling chamber 5. The rollers 500 are configured to rotate. In an embodiment, a rotation of the rollers 500 provides the compression of the crops and the progressive formation of the bale.

The baler 1, in an embodiment, includes a plurality of belts 502. The baler 1, in an embodiment, includes a plurality of belts sprockets 501. The belts 502 are movable by a rotation of the belts sprockets 501. In an embodiment, a movement of the belts 502 provides a formation of the bale.

The tailgate 6, in the closed position (illustrated), cooperates with the frame 3 to delimit the baling chamber 5.

The baler 1, in an embodiment, includes a cylinder-piston actuator 302. The cylinder-piston actuator 302, in an embodiment, is a double effect actuator. The cylinder piston actuator 302, in an embodiment, is connected to the frame 3. The cylinder piston actuator 302, in an embodiment, is connected to the tailgate 301. The cylinder piston actuator 302, in an embodiment, is configured to move the tailgate 301 from the open position to the closed position. The cylinder piston actuator 302, in an embodiment, is configured to move the tailgate 301 from the closed position to the open position.

The baler 1, in an embodiment, includes a binder 12. The binder 12 in an embodiment is provided in the frame 3. The binder 12 is configured for binding the bale with a fastening element. The binder 12 (bale wrapping system) might be configured to bind the bale with net or with plastic film. In an embodiment, the binder 12 (the bale wrapping system) is detached (not integral with) the frame 3. In an embodiment, the binder 12 (the bale wrapping system) is configured to house the bale after the tail gate 301 has been open and to bind or wrap the bale outside the baling chamber 5. The baler 1 includes a pick-up device 9. The pick-up device 9 is configured to collect the crops. The pick-up device, in an embodiment, includes a pick-up shaft having rake teeth. The pick-up shaft is configurated to rotate. The pick-up device 9 in an embodiment comprises a pair of pick-up wheels 901, movably connected to the ends of the pick-up shaft.

The baler 1, in an embodiment, includes a pushing rotor. The pushing rotor is positioned between the pick-up device 9 and the baling chamber 5, to feed the crops collected by the pick-up device 9 to the baling chamber 5. In another embodiment, the pick-up device itself is configured to feed the collected crops to the baling chamber 5.

The baling chamber 5 (the frame 3) a first side wall 501. The baling chamber 5 (the frame 3) a second side wall 502. The first side wall 501, the second side wall 502 and the plurality of rollers 500 cooperates to define the baling chamber 5.

The baling chamber 5 comprises a first contact element 503A and a second contact element 503B. The first contact element 503A comprises a respective contact surface 503A'. The second contact element 503B comprises a respective contact surface 503B'. The contact surfaces 503A', 503B' of the contact elements 503A, 503B are configured to contact the bale into the baling chamber 5. The contact surfaces 503A', 503B' of the contact elements 503A, 503B face on the internal volume of the baling chamber 5. In one embodiment, the first contact element 503A and/or the second contact element 503B has a curve shape with convexity facing in the internal volume of the baling chamber 5. In other embodiments, the first contact element 503A and/or the second contact element 503B has a plane disc shape.

In one embodiment, the first contact element 503A and/or the second contact element 503B are configured to tilt around a respective tilting axis T1, T2. As a consequence of the contact element titling the respective contact surface change its contact point with the bale, varying the compression on the bale.

The first contact element 503A has configured to rotate around a correspondent rotational axis R1, perpendicular to the respective tilting axis T1 of the first contact element 503A. The second contact element 503B has configured to rotate around a correspondent rotational axis R2, perpendicular to the respective tilting axis T2 of the second contact element 503B.

In one embodiment, each rotational axis R1, R2 is configured to vary its inclination with respect to the longitudinal direction L, forming a respective angle of inclination A, A'. In particular, each angle of inclination variation is a consequence of the first and second contact element tilting around the respective tilting axis.

In one embodiment, the first and/or the second contact element 503A, 503B is configured to rotate idle. In one embodiment, the first and/or the second contact element 503A, 503B is configured to rotate driven by an actuator 10.

The actuator 10 can be a linear actuator, such as a piston-cylinder assembly. The actuator 10 can be a rotative actuator, such as an electric motor. The actuator 10 is connected with the first contact element 503A and/or the second contact element 503B, for move them and compress the bale into the baling chamber 5.

In one embodiment, each of the first and the second contact element 503A, 503B comprises a respective first hinge 504A, 504B. In one embodiment, each of the first and the second contact element 503A, 503B comprises a respective second hinge 505A, 505B.

In one embodiment, each tilting axis T1, T2 pass through the respective first hinge 504A, 504B. In one embodiment, each tilting axis T1, T2 pass through the respective second hinge 505A, 505B.

In one embodiment, each of the first and the second contact element 503A, 503B comprises a connection element 506A, 506B. The connection element 506A of the first contact element 503A is configured to connect the first contact element 503A with the first side wall 501 of the frame 3. The connection element 506B of the second contact element 503B is configured to connect the second contact element 503B with the second side wall 502 of the frame 3.

In one embodiment, each connection element 506A, 506B is movable on the respective first side wall 501 or second side wall 502, along a sliding direction, transversal to the longitudinal direction L.

In one embodiment, the first contact element 503A is configured to slide along a longitudinal direction L. In one embodiment, the first contact element 503B is configured to slide along a longitudinal direction L. The first and the second contact element 503A, 503B are configured to slide along the longitudinal direction L to get closer to each other, during a compression of the bale, or to move away from each other during the ejection of the bale. In one embodiment, the actuator 10 is configured to move only one of the first or the second contact element 503A, 503B while the other is fixed with respect to the frame 3.

In one embodiment, the first and/or the second contact element 503A, 503B comprises a pressing portion 508. In one embodiment, each of the first and the second contact element 503A, 503B comprises a respective pressing portion 508A, 508B. Each pressing portion 508A, 508B is configured to reduce the respective contact surface 503A', 503B' for reducing the initial force required for the compression. The pressing portion 508 protruding towards the baling chamber 5, with respect to a remaining portion of the respective contact surface 503A', 503B'.

In one embodiment, the pressing element 508A of the first contact element 503A and the pressing element 508B of the first contact element 503B are angularly spaced by a phase angle of 180°.

In one embodiment, the first and the second contact element 503A, 503B are rotationally fixed while the bale is kept in rotation by means of the rollers 500. In one embodiment, the first and the second contact element 503A, 503B are configured to rotate together with the bale.

In one embodiment, the bale is configured to rotate at a first rotational speed. The first and the second contact element 503A, 503B are configured to rotate synchronously at a second rotational speed. In one embodiment, the first and the second rotational speed are different so that the points wherein each pressing element 508A, 508B is in contact with the bale vary along the circumferential of the bale itself.

In one embodiment, the baler comprises a further actuator 10A, configured to drive the rollers 500. In one embodiment, the actuator 10 is configured to drive both the first and the second contact elements 503A, 503B and the rollers 500 (so the further actuator 10A is not provided in this exemplificative embodiment). In one embodiment, the further actuator 10A is configured to drive both the first and the second contact elements 503A, 503B and the rollers 500 (so the actuator 10 is not provided in this exemplificative embodiment).

In one embodiment, the baler comprises a transmission system 11. The transmission system 11 is configured to transmit the motion (for example from a power take-off connectable to the tractor) to the first and second contact element 503A, 503B. In one embodiment, the transmission system 11 comprises a belt 11A. In one embodiment, the transmission system 11 comprises a first pulley 11B, connected to a shaft of at least one roller 500' of the rollers 500. In one embodiment, the transmission system 11 comprises a couple of pulleys 11C, 11C', connected to the first and the second contact element 503A, 503B, respectively. In one embodiment, each pulley 11C, 11C' of the couple of pulleys is connected with the first contact element 503A and the second contact element 503B through a respective screw connection 12A, 12B. Because the couple of pulleys 11C, 11C' is fixed along the longitudinal direction, their rotation is transformed into a rotation and sliding of the respective contact element 203A, 203B. This embodiment allows to compress the bale and also rotate, reducing the friction of the bale with the contact surfaces 203A', 203B'. In any case, the transmission system 11 may be carried out through any other mechanical solution.

The pressing element 508A, 508B can be implemented also in this embodiment for helping the contact surfaces 203A', 203B' to compress the bale.

In one embodiment, the pressing element is a rolling element 508', such as a roller. The rolling element 508' is mainly elongated along a radial direction, perpendicular to the longitudinal direction L. The rolling element 508' is configured to rotate around an axis of rotation, parallel to the radial direction. The rolling element 508', in one embodiment, extends from the center of the respective contact element 503A, 503B to the external circumferential of the respective contact element 503A, 503B.

The rolling element 508' is configured to rotate when it is pressed on the respective end surface of the bale, thus reducing the friction of the pressing element 508 caused by the compression. The rolling element 508' is connected to the respective contact element 503A, 503B with a couple of bearings 508".,

In one embodiment, the first contact element 503A comprises a rolling element 508A'. In one embodiment, the first contact element 503A comprises a couple of bearings 508A". In one embodiment, the second contact element 503B comprises a rolling element 508B'. In one embodiment, the second contact element 503B comprises a couple of bearings 508B".

In one embodiment, the baler 1 comprises a bale wrapping system 13, configured for inserting wrapping material into the baling chamber.

In one embodiment, the baler 1 comprising a first 14A and a second 14B shaft. The first 14A and the second 14B shaft are configured for rotating around a wrapping axis. The wrapping axis may be operatively aligned with the longitudinal axis L of the bale housed in the baling chamber 5.

In one embodiment, the first 14A and the second 14B shaft are configured for translating along the wrapping axis. In one embodiment, the first 14A and the second 14B shaft are configured for translating along the wrapping axis from a retracted position P1, not interfering with the bale, to an extracted position P2, wherein respective contact ends of the first 14A and the second shaft 14B operatively abut on the bale.

In one embodiment, the bale wrapping system 13 comprises a film roller 14, configured to store the plastic film before it is put on the bale.

In one embodiment, the bale wrapping system 13 comprises a first pre-roller 15A. In one embodiment, the bale wrapping system 13 comprises a second pre-roller 15B (even called front roller). The first 15A and the second 15B pre-rollers are configured to enlarge the extension, in a longitudinal direction, of the plastic film. The first 15A and the second 15B pre-rollers are configured to enlarge the extension till a first extension E1.

The first side wall 501 and the second side wall 502 are spaced at a first distance D1. The maximum distance along the longitudinal direction L, between the first contact element 503A and the second contact element 503B, is equal to a second distance D2.

The first distance D1 is comprised into the interval between the second distance D2 and the first extension E1.

The bale wrapping system 13 is configured for feeding the plastic film to the baling chamber 5, so that the plastic film forms a tube U surrounding the bale and protruding at lateral sides form the bale. The bale wrapping system 13 is configured for cutting the plastic film.

The bale wrapping system 13 includes a fastening mechanism 16. The fastening mechanism 16 is configured for tightening, at a wrapping axis, a first U1 and a second U2 portion of the film tube U protruding at lateral sides from the bale.

According to an aspect of the present description, it is also provided a bale wrapping system 13, for wrapping with a plastic film a round bale formed in a baler 1.

The bale wrapping system 13 comprises a structure, for supporting the bale in a wrapping station, the bale having a cylindrical geometry defining a longitudinal axis.

The bale wrapping system 13 comprises rollers, for rotating the bale around the longitudinal axis in the wrapping station.

The bale wrapping system 13 comprises a feeder, for feeding the plastic film to the wrapping station, so that the plastic film forms a tube surrounding the bale and protruding at lateral sides form the bale.

The bale wrapping system 13 comprises a fastening mechanism 16, for tightening, at a wrapping axis, a first U1 and a second portion U2 of the film tube U protruding at lateral sides form the bale, the wrapping axis being operatively aligned with the longitudinal axis of the bale housed in the wrapping station.

According to an aspect of the present description, it is also provided a method for providing a round bale in a baler 1 to be connected to a tractor 2. The method comprises a step of receiving crop material at a baling a chamber 5 supported on a frame 3. This step is performed by means of a pick-up device 9, which picks up the crops from the ground.

The method comprises a step of rotating the crop material in the baling chamber 5, for forming therein a bale having a cylindrical portion and a pair of opposing end surfaces.

The method comprises a step of providing a first contact element 203A. The method comprises a step of providing a second contact element 203B. The first and the second contact elements 203A, 203B are configured for laterally delimiting at least a portion of the baling chamber5, to be operatively in contact with the end surfaces of the bale.

The method comprises a step of applying wrapping material around the bale, through a bale wrapping system 16.

The method comprises a step of a moving the first and/or the second contact elements 203A, 203B with respect to each other, to apply a lateral compression to the bale at the end surfaces thereof.

The method comprises a step of a moving the first and/or the second contact elements 203A, 203B with respect to the frame 3, to apply a lateral compression to the bale at the end surfaces thereof.

In one embodiment, the step of applying wrapping material around the bale includes feeding at the baling chamber 5 a plastic film wound on a reel having a predetermined width. In one embodiment, in the step of applying wrapping material around the bale, the bale is compressed to a lateral width smaller than the predetermined width of the reel, so that, when the plastic film is fed to the baling chamber 5 housing the round bale rotating around a longitudinal axis L, a tube of plastic film is formed, the tube surrounding the bale and protruding at lateral sides form the bale.

In one embodiment, the step of applying wrapping material around the bale further includes tightening a first U1 and a second portion U2 of the film tube U at a wrapping axis operatively aligned with the longitudinal axis L of the bale housed in the baling chamber 5, so to fasten the plastic film at opposite lateral sides of the bale.

This disclosure relates to a whole new type of round baler which in a very simple way presses grass into cylindrical round bale. These round balls (that is, bales) are significantly harder, that is, it contains significantly more grass per cubic unit than one of the rounds of the day, and in addition, plastic films are used as oxygen barriers in a simpler, faster and less expensive way than today's round baler makes.

The new round baler with conical chamber is basically built up like a regular trunk chamber round baler.

On the sketch there is shown a press chamber that is 120 cm in diameter and 120 cm in width. The size of the chamber can of course vary.

Inside the chamber on each side is an oval dish 203A, 203B. This oval plate constitutes an essential part of the invention. The plate is coupled with the operation of the round baler chamber rollers 500 and rotates at the same peripheral speed as the round bale inside the chamber and chamber rolls.

In addition, the angle of the oval plate can be varied. During grass pressing, when grass is brought into the chamber via the pickup 9, the angle will be as shown in Fig A.

When the oval plate has this angle during the feeding of grass, the following is achieved: The grass is compressed by the press rolls around the periphery of a round ball as on a regular round baler. In addition, the two oblique oval spells will compress the cylindrical round ball in its longitudinal direction. This means that the round ball will get a significantly greater density than the round balls pressed in a round baler with today's technology.

Greater density on the round ball will have many advantages. The quality of the grass will be significantly improved as a result of there will be less air (oxygen) in the round bale.

You will also save a lot of plastic film when plastic-film the round balls and thereby create an oxygen barrier.

Transport of the round balls is also simpler and more economical.

When sufficient grass is brought into the round ball and it is fully pressed, the angle of the oval drawstring is changed so that they get a position as shown in Fig B.

There will then be a cavity on either side of the fully pressed round ball which rotates inside the press chamber.

When the oval drawsticks are in position as shown in Fig. B, the tubes 14A, 14B are inserted into the press cam and towards the center of the rotating round ball. The tubes can be round, square or have a different design.

As the pipes are introduced into the press chamber, they will begin to rotate, opposite the way or the same way but at a faster rate than the round ball rotation, or it will also be able to stand still.

Once the tubes have come into position, plastic film from the plastic roll 14 is fed into the press chamber via the two pre-rollers 15A and 15B.

The front roller 15B is initially designed as a regular press roller, while the roller 15A forces the hair very specially. As shown in Fig. B, it has a larger diameter in the center portion than at each end. The center portion will have a width corresponding to the width of the finished pressed round ball rotating in the chamber. By designing the press roll in this way, the plastic film will be stretched significantly more in the center portion than at the edges. This is very important to make it cover the sides of the round ball. When the plastic film is pulled into the press chamber of rotation on the round ball, the plastic film will completely cover the circumferential surface of the round ball. The plastic film, in addition, because it has a width that is substantially larger than the rotating round ball, is pulled down over the side edges of the rotary round ball in the cavity between the round ball.

When the plastic film is pulled into the press chamber of rotation on the round ball, the plastic film will completely cover the circumferential surface of the round ball. The plastic film, in addition, because it has a width that is substantially larger than the rotating round ball, is pulled down over the side edges of the rotating round ball in the cavity between the round ball and the oval plates until they abut the pipe 14A, 14B and begin to wrap around this and form a twist in the center of the round ball on each side. This process will also tighten the plastic film on the sides of the rotating round ball.

After applying the round bale of sufficient amount of plastic film, for example 6 or 8 layers, the plastic film is cut off. A small amount of glue from the containers (18) will then be injected into the two "twists" to close them and make them airtight.

The round ball is now fully pressed and wrapped in an airtight oxygen barrier of plastic film and it can be released from the round bale chamber. This can be done in a conventional way like today's round baler by raising the back of the press chamber and the round bale falling down on the ground.

### Design of the oval plates:

The two oval plates can be shaped approximately as shown in Figs. A and Fig. B. The oval curvature is adapted to the inner diameter of the pressing chamber and the angle to which plates should be pressed so that the finished pressed round ball gets straight side edges.

The two plates must have a strong storage, as they are exposed to great forces. It may also be appropriate to have a flexible coupling between plates and their axles 19, if you want to install vibrators on plates. For example, installing electric vibrators on plates will further help to increase the density of the round bale. You will also be able to mount hydraulic or mechanical vibrators on the oval plates.

In the example above, glue is used to close the two "twists" on either side of the round ball. You can also use a heating element in the center on the two plates to seal the "twists" by melting / shrinking the plastic.

Another option would be to use a tie system similar to what is currently being used on square balls.

### Designing the Extensions:

As mentioned above, the two strands 15A and 15B will have a special shape. This must be done in order for the plastic film to fully cover the rotating ball.

Normally today, plastic film is applied to rounded balls stretched 150-300%. That is, one meter plastic film can be stretched to 4 meters.

According to this invention, the diameter of the biasing roller (15B) must have a different diameter. This will cause the plastic film on each side to be stretched significantly less than in the center portion.

### Summary

This patent application concerns a round baler with conical press chamber, where two oval plates rotate at a speed equal to the rotational speed of the round bale in the press chamber.

The angle of the plates will change according to press mode or packing mode. In parcel mode, each plate will lie adjacent to the side of the press chamber and a cavity will occur on each side of the round ball. This allows the entire round ball to be fully encased in plastic film when plastic film is drawn into the press chamber of the rotating round ball. This is done by means of pipes introduced into the chamber through the center of each plate and by rotation of the round ball forms a twist of plastic film on either side of the round ball.

## Claims

1. A bale wrapping system (13), for wrapping with a plastic film a round bale formed in a baler (1), the bale wrapping system (13) comprising:
- a structure, for supporting the bale in a wrapping station, the bale having a cylindrical geometry defining a longitudinal axis;
- rollers, for rotating the bale around the longitudinal axis in the wrapping station;
**characterized in that** the baler wrapping system includes:
- a feeder (15A, 15B), for feeding the plastic film to the wrapping station, so that the plastic film forms a tube (U) surrounding the bale and protruding at lateral sides form the bale;
- a fastening mechanism (16), for tightening, at a wrapping axis, a first (U1) and a second (U2) portion of the film tube protruding at lateral sides form the bale, the wrapping axis being operatively aligned with the longitudinal axis of the bale housed in the wrapping station.

2. The bale wrapping system (13) according to claim 1, comprising a first pre-roller (15A) and a second pre-roller (15B).

3. The bale wrapping system (13) according to claim 2, wherein the first (15A) and the second (15B) pre-rollers are configured to enlarge the extension, in a longitudinal direction, of the plastic film, till a first extension (E1).

4. The bale wrapping system (13) according to claim 1, 2 or 3, comprising a first contact element (503A) and a second contact element (503B), arranged to be operatively in contact with the end surfaces of the bale and movable with respect to each other, to apply a lateral compression to the bale at the end surfaces thereof.

5. The bale wrapping system (13) according to claim 4, wherein the first (503A) and the second (503B) contact elements are movable between a first position, wherein respective contact surfaces (503A', 503B') of the first (503A) and the second (503B) contact elements are at a first distance, and a second position, wherein the respective contact surfaces are at a second distance greater than the first distance.

6. The bale wrapping system (13) according to claim 4 or 5, wherein the first (503A) and the second (503B) contact elements are tilting around respective tilting axes (T1, T2) transverse to a longitudinal direction (L), the longitudinal direction (L) being parallel to the longitudinal axis of the bale.

7. The bale wrapping system (13) according to claim 4 or 5 or 6, wherein, for each one of the first (503A) and the second (503B) contact elements, the respective contact surface (503A', 503B') has a pressing portion (508A, 508B), the pressing portion (508A, 508B) protruding towards the baling chamber (5), with respect to a remaining portion of the contact surface (503A', 503B') and
wherein each one of the first (503A) and the second (503B) contact elements includes a pressing roller (508A', 508B'), rotating idle around an axis laying in a plane perpendicular to a longitudinal direction (L), the longitudinal direction (L) being parallel to the longitudinal axis of the bale, and wherein, for each one of the first (503A) and the second (503B) contact elements, the pressing portion (508A, 508B) of the contact surface (503A', 503B') is defined by the respective pressing roller (508A', 508B').

8. A baler (1) connectable to a tractor (2) for providing round bales, comprising:
- a frame (3) provided with wheels (4) and connectable to the tractor (2);
- a baling chamber (5) supported on the frame (3), for receiving crop material and for housing a formed bale;
- a pick-up device (9), configured for feeding the crop material into the baling chamber (5) for forming therein a bale having a cylindrical portion and a pair of opposing end surfaces,
- rollers (500) surrounding the baling chamber (5) at a cylindrical periphery thereof, to impart the bale housed in the baling chamber (5) a rotation around a longitudinal axis of the bale;
- a bale wrapping system (13), configured for inserting wrapping material into the baling chamber (5),
the baler (1) being **characterized in that** the bale wrapping system (13) is according to claim 1.

9. The baler according to claim 8, wherein the bale wrapping system (13) comprises a first pre-roller (15A) and a second pre-roller (15B), configured to enlarge the extension, in a longitudinal direction, of the plastic film, till a first extension (E1), and comprises a first contact element (503A) and a second contact element (503B), arranged to be operatively in contact with the end surfaces of the bale and movable with respect to each other, to apply a lateral compression to the bale at the end surfaces thereof,
wherein the bailing chamber (5) includes a first side wall (501) and a second side wall (502), spaced from each other at a first distance D1 and
wherein the maximum distance along the longitudinal direction (L), between the first contact element (503A) and the second contact element (503B), is equal to a second distance (D2) and wherein the first distance (D1) is comprised into the interval between the second distance (D2) and the first extension (E1).

10. A method for wrapping with a plastic film a round bale formed in a baler (1), the method comprising the following steps:
- supporting the bale in a wrapping station, the bale having a cylindrical geometry defining a longitudinal axis;
- rotating the bale around the longitudinal axis, when the bale is in the wrapping station;
**characterized in** having the following steps:
- feeding the plastic film to the wrapping station, so that the plastic film surrounds the bale and forms first (U1) and second (U2) portions protruding at lateral sides form the bale;
- tightening the first (U1) and the second (U2) portion of the film at a wrapping axis operatively aligned with the longitudinal axis of the bale housed in the baling chamber (5), so to fasten the plastic film at opposite lateral sides of the bale.

11. The method of claim 10, comprising a step of applying a lateral compression to the bale at the end surfaces thereof.

12. The method of claim 11, wherein the lateral compression is applied through a first (203A) contact element and the second (203B) contact element arranged to be operatively in contact with the end surfaces of the bale, the first (203A) and the second (203B) contact elements being moved with respect to each other to laterally compress the bale.

13. The method of claim 10 or 11, wherein the lateral compression is applied prior to the wrapping step.

14. The method according to any claims from 10 to 13, wherein, in the step of feeding, a first pre-roller (15A) and a second pre-roller (15B) feed the plastic film to the wrapping station.

15. The method according to claim 14, wherein the first (15A) and the second (15B) pre-rollers enlarge the extension, in a longitudinal direction, of the plastic film till a first extension (E1).

## Patentansprüche

1. Ballenumwicklungssystem (13) zum Umwickeln eines in einer Ballenpresse (1) geformten Rundballens mit einer Kunststofffolie, wobei das Ballenumwicklungssystem (13) Folgendes umfasst:
- eine Struktur zum Stützen des Ballens in einer Umwicklungsstation, wobei der Ballen eine zylindrische Geometrie, definierend eine Längsachse, aufweist;
- Walzen, um den Ballen in der Umwicklungsstation rund um die Längsachse zu drehen,
**dadurch gekennzeichnet, dass** das Ballenumwicklungssystem Folgendes einschließt:
- eine Zuführung (15A, 15B), um der Umwicklungsstation die Kunststofffolie zuzuführen, sodass die Kunststofffolie ein Rohr (U) bildet, das den Ballen umgibt und an seitlichen Seiten von dem Ballen hervorsteht;
- einen Befestigungsmechanismus (16), um einen ersten (U1) und einen zweiten (U2) Abschnitt des an seitlichen Seiten vom Ballen hervorstehenden Folienrohrs festzuspannen, wobei die Umwicklungsachse betriebswirksam fluchtend zur Längsachse des in der Umwicklungsstation untergebrachten Ballens ausgerichtet ist.

2. Ballenumwicklungssystem (13) nach Anspruch 1, umfassend eine erste Vorwalze (15A) und eine zweite Vorwalze (15B).

3. Ballenumwicklungssystem (13) nach Anspruch 2, wobei die erste (15A) und die zweite (15B) Vorwalze ausgelegt sind, um die Ausdehnung der Kunststofffolie in einer Längsrichtung bis zu einer ersten Ausdehnung (E1) zu vergrößern.

4. Ballenumwicklungssystem (13) nach Anspruch 1, 2 oder 3, umfassend ein erstes Kontaktelement (503A) und ein zweites Kontaktelement (503B), die angeordnet sind, um betriebswirksam mit den Endoberflächen des Ballens in Kontakt zu sein, und die zueinander bewegbar sind, um eine seitliche Kompression auf den Ballen an dessen Endoberflächen auszuüben.

5. Ballenumwicklungssystem (13) nach Anspruch 4, wobei das erste (503A) und das zweite (503B) Kontaktelement zwischen einer ersten Position, in der sich jeweilige Kontaktoberflächen (503A', 503B') des ersten (503A) und des zweiten (503B) Kontaktelements an einem ersten Abstand befinden, und einer zweiten Position, in der sich die jeweiligen Kontaktoberflächen an einem zweiten Abstand, der größer ist als der erste Abstand, befinden, bewegbar sind.

6. Ballenumwicklungssystem (13) nach Anspruch 4 oder 5, wobei das erste (503A) und das zweite (503B) Kontaktelement rund um jeweilige Kippachsen (T1, T2) quer zu einer Längsrichtung (L) gekippt werden, wobei die Längsrichtung (L) parallel zur Längsachse des Ballens verläuft.

7. Ballenumwicklungssystem (13) nach Anspruch 4 oder 5 oder 6, wobei die jeweilige Kontaktoberfläche (503A', 503B') sowohl beim ersten (503A) als auch beim zweiten (503B) Kontaktelement einen Pressabschnitt (508A, 508B) aufweist und der Pressabschnitt (508A, 508B) hinführend zur Presskammer (5) in Bezug auf einen verbleibenden Abschnitt der Kontaktoberfläche (503A', 503B') hervorsteht, und
wobei sowohl das erste (503A) als auch das zweite (503B) Kontaktelement eine Presswalze (508A', 508B') einschließen, die sich freilaufend um eine Achse dreht, die in einer Ebene senkrecht zu einer Längsrichtung (L) liegt, wobei die Längsrichtung (L) parallel zur Längsachse des Ballens verläuft, und wobei der Pressabschnitt (508A, 508B) der Kontaktoberfläche (503A', 503B') sowohl beim ersten (503A) als auch beim zweiten (503B) Kontaktelement durch die jeweilige Presswalze (508A', 508B') definiert ist.

8. An einen Traktor (2) anschließbare Ballenpresse (1) zur Bereitstellung von Rundballen, umfassend:
- einen Rahmen (3), der mit Rädern (4) versehen und an den Traktor (2) anschließbar ist;
- eine Presskammer (5), die auf dem Rahmen (3) gestützt wird, um Erntegut aufzunehmen und einen geformten Ballen unterzubringen;
- eine Aufnahmevorrichtung (9), die ausgelegt ist, um das Erntegut der Presskammer (5) zuzuführen, um darin einen Ballen zu formen, der einen zylindrischen Abschnitt und ein Paar gegenständiger Endoberflächen aufweist;
- Walzen (500), die die Presskammer (5) an einem zylindrischen Umfang davon umgeben, um den Ballen in der Presskammer (5) rund um eine Längsachse des Ballens in eine Drehung zu versetzen;
- ein Ballenumwicklungssystem (13), das ausgelegt ist, um Umwicklungsmaterial in die Presskammer (5) einzufügen,
wobei die Ballenpresse (1) **dadurch gekennzeichnet ist, dass** das Ballenumwicklungssystem (13) nach Anspruch 1 ausgeführt ist.

9. Ballenpresse nach Anspruch 8, wobei das Ballenumwicklungssystem (13) eine erste Vorwalze (15A) und eine zweite Vorwalze (15B) umfasst, die ausgelegt sind, um die Ausdehnung der Kunststofffolie in einer Längsrichtung bis zu einer ersten Ausdehnung (E1) zu vergrößern, und die ein erstes Kontaktelement (503A) und ein zweites Kontaktelement (503B) umfasst, die angeordnet sind, um betriebswirksam mit den Endoberflächen des Ballens in Kontakt zu sein, und die zueinander bewegbar sind, um eine seitliche Kompression auf den Ballen an dessen Endoberflächen auszuüben,
wobei die Presskammer (5) eine erste Seitenwand (501) und eine zweite Seitenwand (502) einschließt, die voneinander an einem ersten Abstand D1 beabstandet sind,
und wobei der maximale Abstand entlang der Längsrichtung (L) zwischen dem ersten Kontaktelement (503A) und dem zweiten Kontaktelement (503B) gleich einem zweiten Abstand (D2) ist, und wobei der erste Abstand (D1) in dem Intervall zwischen dem zweiten Abstand (D2) und der ersten Ausdehnung (E1) enthalten ist.

10. Verfahren zum Umwickeln eines in einer Ballenpresse (1) geformten Rundballens mit einer Kunststofffolie, wobei das Verfahren die folgenden Schritte umfasst:
- Stützen des Ballens in einer Umwicklungsstation, wobei der Ballen eine zylindrische Geometrie, definierend eine Längsachse, aufweist;
- Drehen des Ballens rund um die Längsachse, wenn sich der Ballen in der Umwicklungsstation befindet,
**dadurch gekennzeichnet, dass** es die folgenden Schritte aufweist:
- Zuführen der Kunststofffolie zur Umwicklungsstation, sodass die Kunststofffolie den Ballen umgibt und erste (U1) und zweite (U2) Abschnitte formt, die an seitlichen Seiten von dem Ballen hervorstehen;
- Festziehen des ersten (U1) und des zweiten (U2) Abschnitts der Folie an einer Umwicklungsachse, die betriebswirksam fluchtend zur Längsachse des in der Presskammer (5) untergebrachten Ballens ausgerichtet ist, sodass die Kunststofffolie an entgegengesetzten Seiten des Ballens befestigt wird.

11. Verfahren nach Anspruch 10, umfassend einen Schritt zum Ausüben einer seitlichen Kompression auf den Ballen an dessen Endoberflächen.

12. Verfahren nach Anspruch 11, wobei die seitliche Kompression durch ein erstes (203A) Kontaktelement und das zweite (203B) Kontaktelement ausgeübt wird, die so angeordnet sind, dass sie betriebswirksam mit den Endoberflächen des Ballens in Kontakt sind, wobei das erste (203A) und das zweite (203B) Kontaktelement zueinander bewegt werden, um den Ballen seitlich zu komprimieren.

13. Verfahren nach Anspruch 10 oder 11, wobei die seitliche Kompression vor dem Schritt zum Umwickeln ausgeübt wird.

14. Verfahren nach einem der Ansprüche 10 bis 13, wobei eine erste Vorwalze (15A) und eine zweite Vorwalze (15B) die Kunststofffolie der Umwicklungsstation beim Schritt zum Zuführen zuführen.

15. Verfahren nach Anspruch 14, wobei die erste (15A) und die zweite (15B) Vorwalze die Ausdehnung der Kunststofffolie in einer Längsrichtung bis zu einer ersten Ausdehnung (E1) vergrößern.

## Revendications

1. Système d'enveloppement de balles (13), pour envelopper avec un film plastique une balle ronde formée dans une presse à balles (1), le système d'enveloppement de balle (13) comprenant :
- une structure, pour soutenir la balle dans un poste d'enveloppement, la balle ayant une géométrie cylindrique définissant un axe longitudinal ;
- des rouleaux, pour faire tourner la balle autour de l'axe longitudinal dans le poste d'enveloppement ;
**caractérisé en ce que** le système d'enveloppement de la presse à balles inclut :
- un dispositif d'alimentation (15A, 15B), pour alimenter le film plastique vers le poste d'enveloppement, de sorte que le film plastique forme un tube (U) entourant la balle et faisant saillie sur les côtés latéraux de la balle ;
- un mécanisme de fixation (16), pour serrer, au niveau d'un axe d'enveloppement, une première (U1) et une seconde (U2) portion du tube de film faisant saillie au niveau des côtés latéraux de la balle, l'axe d'enveloppement étant fonctionnellement aligné sur l'axe longitudinal de la balle logée dans le poste d'enveloppement.

2. Système d'enveloppement de balles (13) selon la revendication 1, comprenant un premier pré-rouleau (15A) et un second pré-rouleau (15B).

3. Système d'enveloppement de balles (13) selon la revendication 2, dans lequel les premier (15A) et second (15B) pré-rouleaux sont configurés pour agrandir l'extension, dans une direction longitudinale, du film plastique, jusqu'à une première extension (E1).

4. Système d'enveloppement de balles (13) selon la revendication 1, 2 ou 3, comprenant un premier élément de contact (503A) et un second élément de contact (503B), agencés pour être fonctionnellement en contact avec les surfaces d'extrémité de la balle et mobiles l'un par rapport à l'autre, pour appliquer une compression latérale à la balle au niveau des surfaces d'extrémité de celle-ci.

5. Système d'enveloppement de balles (13) selon la revendication 4, dans lequel les premier (503A) et second (503B) éléments de contact sont mobiles entre une première position, dans laquelle les surfaces de contact (503A', 503B') respectives des premier (503A) et second (503B) éléments de contact sont à une première distance, et une seconde position, dans laquelle les surfaces de contact respectives sont à une seconde distance supérieure à la première distance.

6. Système d'enveloppement de balles (13) selon la revendication 4 ou 5, dans lequel les premier (503A) et second (503B) éléments de contact sont inclinés autour d'axes d'inclinaison (T1, T2) respectifs transversaux à une direction longitudinale (L), la direction longitudinale (L) étant parallèle à l'axe longitudinal de la balle.

7. Système d'enveloppement de balles (13) selon la revendication 4 ou 5 ou 6, dans lequel, pour chacun des premier (503A) et second (503B) éléments de contact, la surface de contact (503A', 503B') respective comporte une portion de pression (508A, 508B), la portion de pression (508A, 508B) faisant saillie vers la chambre de mise en balle (5), par rapport à une portion restante de la surface de contact (503A', 503B') et
dans lequel chacun des premier (503A) et second (503B) éléments de contact inclut un rouleau de pression (508A', 508B'), tournant à vide autour d'un axe s'étendant dans un plan perpendiculaire à une direction longitudinale (L), la direction longitudinale (L) étant parallèle à l'axe longitudinal de la balle, et dans lequel, pour chacun des premier (503A) et second (503B) éléments de contact, la portion de pression (508A, 508B) de la surface de contact (503A', 503B') est définie par le rouleau de pression (508A', 508B') respectif.

8. Presse à balles (1) pouvant être reliée à un tracteur (2) pour créer des balles rondes, comprenant :
- un châssis (3) muni de roues (4) et reliable au tracteur (2) ;
- une chambre de mise en balles (5) soutenue sur le châssis (3), pour recevoir le matériel de récolte et pour loger une balle formée ;
- un dispositif de ramassage (9), configuré pour alimenter le matériau de récolte dans la chambre de mise en balles (5) pour y former une balle ayant une portion cylindrique et une paire de surfaces d'extrémité opposées ;
- des rouleaux (500) entourant la chambre de mise en balles (5) au niveau d'une périphérie cylindrique de celle-ci, pour imprimer à la balle logée dans la chambre de mise en balles (5) une rotation autour d'un axe longitudinal de la balle ;
- un système d'enveloppement de balles (13), configuré pour insérer un matériau d'enveloppement dans la chambre de mise en balles (5),
la presse à balles (1) étant **caractérisée en ce que** le système d'enveloppement de balles (13) est selon la revendication 1.

9. Presse à balles selon la revendication 8, dans laquelle le système d'enveloppement de balles (13) comprend un premier pré-rouleau (15A) et un second pré-rouleau (15B), configurés pour agrandir l'extension, dans une direction longitudinale, du film plastique, jusqu'à une première extension (E1), et comprend un premier élément de contact (503A) et un second élément de contact (503B), agencés pour être fonctionnellement en contact avec les surfaces d'extrémité de la balle et mobiles l'un par rapport à l'autre, pour appliquer une compression latérale à la balle au niveau des surfaces d'extrémité de celle-ci,
dans laquelle la chambre de mise en balle (5) inclut une première paroi latérale (501) et une seconde paroi latérale (502), espacées l'une de l'autre à une première distance D1 et dans laquelle la distance maximale le long de la direction longitudinale (L), entre le premier élément de contact (503A) et le second élément de contact (503B), est égale à une seconde distance (D2) et dans laquelle la première distance (D1) est comprise dans l'intervalle entre la seconde distance (D2) et la première extension (E1).

10. Procédé pour envelopper avec un film plastique une balle ronde formée dans une presse à balles (1), le procédé comprenant les étapes suivantes :
- soutenir la balle dans un poste d'enveloppement, la balle ayant une géométrie cylindrique définissant un axe longitudinal ;
- faire tourner la balle autour de l'axe longitudinal, lorsque la balle est dans le poste d'enveloppement ;
**caractérisé en ce qu'**il comporte les étapes suivantes :
- alimenter le film plastique vers le poste d'enveloppement, de sorte que le film plastique entoure la balle et forme une première (U1) et une seconde (U2) portions faisant saillie sur les côtés latéraux de la balle ;
- serrer la première (U1) et la seconde (U2) portion du film au niveau d'un axe d'enveloppement fonctionnellement aligné sur l'axe longitudinal de la balle logée dans la chambre de mise en balle (5), de manière à fixer le film plastique au niveau des côtés latéraux opposés de la balle.

11. Procédé selon la revendication 10, comprenant une étape consistant à appliquer une compression latérale à la balle au niveau des surfaces d'extrémité de celle-ci.

12. Procédé selon la revendication 11, dans lequel la compression latérale est appliquée par l'intermédiaire d'un premier (203A) élément de contact et du second (203B) élément de contact agencés pour être fonctionnellement en contact avec les surfaces d'extrémité de la balle, les premier (203A) et second (203B) éléments de contact étant déplacés l'un par rapport à l'autre pour comprimer latéralement la balle.

13. Procédé selon la revendication 10 ou 11, dans lequel la compression latérale est appliquée avant l'étape consistant à envelopper.

14. Procédé selon l'une quelconque des revendications 10 à 13, dans lequel, dans l'étape consistant à alimenter, un premier pré-rouleau (15A) et un second pré-rouleau (15B) alimentent le film plastique vers le poste d'enveloppement.

15. Procédé selon la revendication 14, dans lequel les premier (15A) et second (15B) pré-rouleurs agrandissent l'extension, dans une direction longitudinale, du film plastique jusqu'à une première extension (E1).
